# EUROPÄISCHE PATENTSCHRIFT

(11) **EP 0 944 013 B1**
(45) Veröffentlichungstag und Bekanntmachung des Hinweises auf die Patenterteilung: **15.08.2007**
(21) Anmeldenummer: 99104837.2
(22) Anmeldetag: 11.03.1999
(51) Int. Cl.: G06K 19/04, G06K 19/06, G06K 19/08, G06K 1/12, G06K 7/01

(54) **Thermochromdrucker**
Thermochromic printer
Imprimante thermochrome

(30) Priorität: 17.03.1998 DE 19811538
(43) Veröffentlichungstag der Anmeldung: 22.09.1999
(73) Patentinhaber: BÖWE CARDTEC GmbH, 33106 Paderborn (DE)
(72) Erfinder: Hilkenmeier, Jürgen, 33106 Paderborn (DE); Peters, Hinderikus, 33106 Paderborn (DE); Gloger, Wolfgang, 33154 Salzkotten (DE)
(74) Vertreter: Hanewinkel, Lorenz

(56) Entgegenhaltungen:
- EP-A- 0 172 584
- EP-A- 0 689 160
- EP-A- 0 787 336

## Beschreibung

Die Erfindung betrifft eine Vorrichtung zum Bearbeiten einer Datenträgerkarte mit einer thermisch beschreibbaren Schicht, wobei die Datenträgerkarte in die Vorrichtung durch einen umkehrbaren Antrieb eingezogen, dort einer Chiplese-Schreibstation und/oder einer Magnetstreifenlese-Schreibstation sowie einer thermischen Beschriftungsstation nacheinander zugeführt und aus der Vorrichtung ausgeworfen wird.

Derartige Vorrichtungen sind aus der EP 0 172 584 A2 bekannt und dienen dazu nach einer elektronischen Bearbeitung der im Datenträger einer Datenkarte enthaltenen Daten, z. B. einer Abbuchung, dazugehörige Information auf der Karte sichtbar zu machen. Hierzu sind Thermodruckerstationen bekannt, die aus einer Zeile von elektrisch heizbaren Punkten bestehen, die mit einer durch Heizung verfärbbaren Schicht auf der Datenträgerkarte kontaktiert sind, so daß bei einem zeilenweisen Vorschub der Karte darauf entsprechend der elektrischen Ansteuerung Buchstaben, Zahlen oder Symbole entstehen. Ein solcher Thermodruck ist relativ langsam, und das Schriftfeld ist begrenzt und für nur wenige oder außerordentliche Vorgänge nutzbar.

Weiterhin sind aus der WO 96/11451 Vorrichtungen für die Bearbeitung von Ausweiskarten bekannt, die mit einer löschbaren und wiederbeschreibbaren sogenannten Thermochromic-Schicht versehen sind und einen elektronischen Modul enthalten. Diese Schicht wird bei der Einwirkung einer Löschtemperatur über eine vorgegebene Mindestlöschzeit in einen farblichen Grundzustand, der i. a. metallisch aussieht, gebracht und bei einer Einwirkung einer Schreibtemperatur, die höher als die Löschtemperatur liegt, farblich verändert, gewöhnlich matt weiß. Derartige Schichten sind jedoch sehr kratzempfindlich, und Schmutzpartikel oder Staubkörner werden bei dem Überfahren der Schicht mit der in diese eingebrannt oder verursachen dauerhafte Längsriefen darin.
Deshalb wird die Schicht vor der Erstbenutzung mit einer Schutzfolie abgedeckt, die von Hand zu entfernen ist. Bei der Kartenbearbeitung wird die Karte durch eine Transportbahn bewegt und dabei von einer Andruckrolle gegen einen Löschkopf und einen zeilenförmigen schreibkopf jeweils dann angedrückt, wenn der zu löschende bzw. zu beschreibende Bereich sich dort befindet, so dass die Thermochromic-Schicht schleifend belastet wird.

Es ist Aufgabe der Erfindung, eine Vorrichtung und eine Datenträgerkarte zu schaffen, die eine langfristige und häufige Beschreibbarkeit gewährleistet.

Die aufgabengemäße Vorrichtung ist dadurch gekennzeichnet, daß der thermischen Beschriftungsstation eine thermische Löschstation vorgeordnet ist, die mit einer thermostatisch auf eine Löschtemperatur einer Thermochromic-Schicht geheizten Heizplatte bestückt ist, die bei stehendem Antrieb mit der thermisch wiederbeschreibbaren Schicht während einer Löschzeit kontaktiert wird, und wobei die thermische Beschriftungsstation mit mindestens einer stempelartigen Druckzeile mit elektrisch heizbaren Mehrsegmentgruppen, deren Heizelemente zeichenartig gruppiert sind, bestückt ist, die mindestens in einer Stellung mit der Schicht für eine Schreibzeit, während jeweils vorgegebene der Heizelemente elektrisch auf eine Schreibtemperatur beheizt sind, kontaktiert wird.

Vorteilhafte Ausgestaltungen sind in den Unteransprüchen angegeben.

Es wird davon ausgegangen, daß die Datenträgerkarte in den Abmessungen und den Anordnungen der Chipkontakte, der Antenne und/oder des Magnetstreifens einer Norm entspricht. Auch die elektrischen und magnetischen Eigenschaften sollten der Norm entsprechen. Demgemäß ist die Karte als Ausweiskarte oder Kreditkarte u. dgl. in bekannter Weise einzusetzen. Der ständige bei einer Benutzung in der Vorrichtung abzuändernde Aufdruck eignet sich insbesondere zur Darstellung von zeitlichen Berechtigungen, z. B. von abgebuchter Parkzeit, zur Anzeige eines Restkredites einer Geldwertkarte oder zur Erinnerung an einen Arzttermin auf einem Krankenkassenausweis.

Die Vorrichtung besteht vorzugsweise aus einer Fördervorrichtung in der die Karte, wenn sie mit ihrer Frontkante eine Lichtschranke oder einen Kontakt passiert hat, durch mehrere Bearbeitungsstationen gefördert wird und aus der sie anschließend wieder fertig beschrieben ausgegeben wird.

Die Förderstrecke besteht aus paarweise über und unter der Förderstrecke angeordneten Rollen oder Rädern, die von Paar zu Paar geringer als die Kartenlänge beabstandet sind, so daß die Karte sich dazwischen eben in der Bearbeitungsstation erstreckt und gehalten ist. Alle Rollenpaare sind synchron von einem Schrittmotorantrieb angesteuert, wozu vorzugsweise Zwischenzahnrädergetriebe dienen.

Für die elektronische Datenbearbeitung wird die Karte beim Hintransport an einem Magnetkopf vorbeigeführt und beim Austransport zum Datenschreiben dort wieder vorbeigeführt.

Ist der Datenbestand in einem Chip enthalten, ist die steuerbar absenkbare Kontaktierungsstation oder die Antennenanordnung in der letzten Bearbeitungsstation. Auf dem Rückweg der Karte erfolgt dann in einer Löschstation das Lösche der bisherigen Beschriftung durch Kontaktierung mit einer auf die Löschtemperatur elektrisch beheizte Heizplatte, die bei Kartenstillstand für die Löschzeit mit der Thermochromic-Schicht kontaktiert wird. Ansonsten ist die Heizplatte abgehoben, um die Schicht zu schonen. Anschließend wird die Karte in die Beschriftungsstation gefördert, wo die Druckzeile bei entsprechend der Druckausgabe geheizten Druckelementen mit der Karte bei deren Stillstand kontaktiert. Außerdem wird ein Klischeedrucker mit einem oder mehreren heizbaren Klischeelementen in der ersten Druckstation oder in einer weiteren Druckstation mit der Karte zum Übertragen des Klischees kontaktiert. So kann z. B. aus einer Geldwertkarte ein Parkausweis für eine abgebuchte Parkzeit oder eine Kinokarte für einen Kinobesuch etc. werden, jenachdem was zuletzt aufgedruckt worden ist und im Datenspeicherteil abgewickelt wurde.

Die Verwendung von einem Klischeedruck und einem Druck mit Zeichenelementgruppen hat den Vorteil, daß nur jeweils eine Schreibzeit von etwa 25 ms für einen Zeilendruck benötigt wird. Für die üblichen Angaben einer Zeit oder eines Datums werden i. a. nur vier Ziffern in Gruppen zu zwei benötigt für Stunden- und Minutenangabe bzw. Tag- und Monatsangabe.

Nur wenn sehr unterschiedliche Angaben gedruckt werden sollen, wird eine heizbare Druckpunktzeile vorgesehen, die jeweils nur dann und in dem unbedingt nötigen Schreibbereich mit der Karte kontaktiert wird. Dadurch wird die Beanspruchung der Thermochromic-Schicht minimiert und der Druckzeitbedarf möglichst gering gehalten.

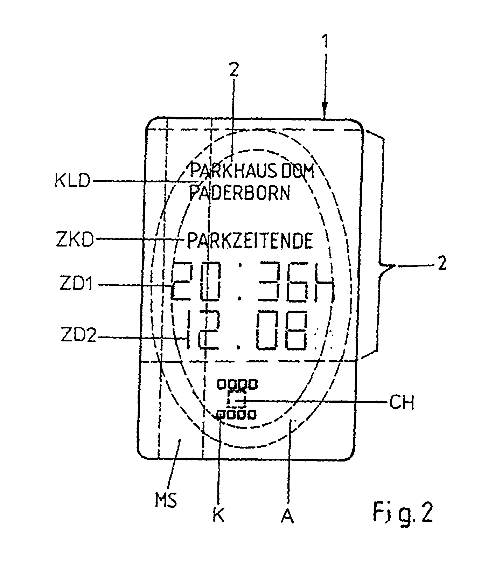

Vorteilhafte Ausgestaltungen sind in den Fig. 1 - 3 dargestellt.
- Fig. 1: zeigt die Vorrichtung schematisch von der Seite im Schnitt;
- Fig. 2: zeigt eine Datenträgerkarte mit mehrfach beschreibbarem Schriftfeld;
- Fig. 3: zeigt einen kombinierten Klischeedrucker und eine Mehrsegmentgruppen-Druckzeile.

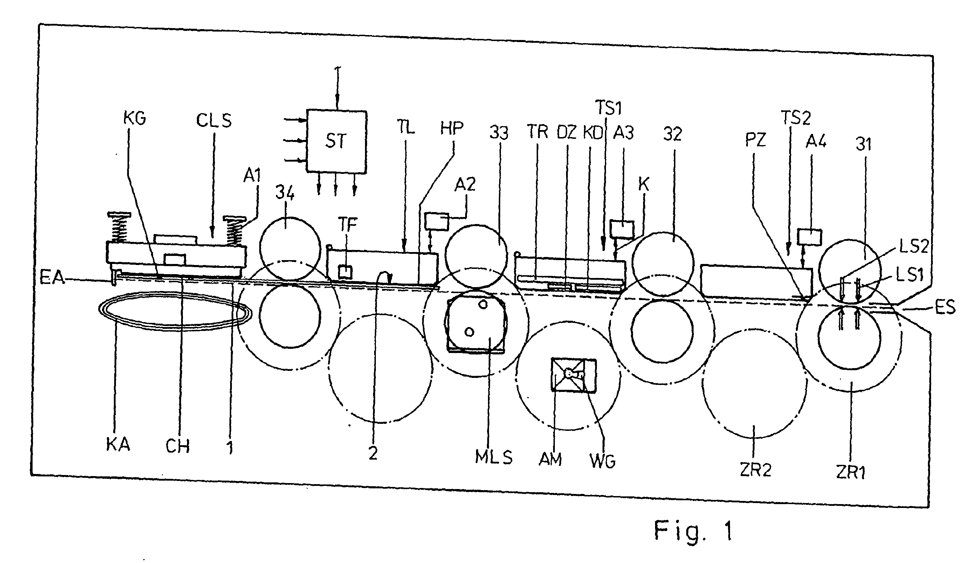

Fig. 1 zeigt eine Datenkarteneinzugsvorrichtung mit mehreren Bearbeitungsstationen für die Datenträgerkarte (1). Die Karte wird jeweils am zentrierenden Einführschlitz (ES) eingesteckt und dort durch einen Kontakt oder Lichtschranken (LS1, LS2) erkannt, wodurch die Steuervorrichtung (ST), wenn die Karte parallel eingeführt ist, den Antriebsmotor (AM) einziehend ansteuert. Der Motor (AM) ist entweder ein Schrittmotor oder mit einem Winkelgeber (WG) ausgestattet, mit dessen Signalen die Kartenposition in der Kartenbahn jeweils in der Steuervorrichtung (ST) mitgeführt wird, demgemäß die Positionierung in den einzelnen Bearbeitungsstationen erfolgt.

Beim Einzug wird die Karte über eine Magnetstreifen-Lese-Schreibstation (MLS) geführt und die Daten dort ausgelesen, sofern mit Magnetstreifeninformation gearbeitet wird.

In der Endstellung des Einzuges findet die Karte (1) einen Endanschlag (EA) an der Chipkontaktiereinheit, die mit einer genormten Kontaktgruppe (KG) die Chipkontakte auf der Karte (1) kontaktiert. Durch die Kontaktgruppe tritt die Steuervorrichtung (ST) in den Datenaustausch mit dem Chip (CH) in der Karte. Alternativ zur federnd mit Andruckmittel (A1) kontaktierten Kontaktgruppe (KG) ist bei Verwendung einer Antennen-Datenkarte eine externe Koppelantenne (KA) vorgesehen, die mit der Steuervorrichtung (ST) in Verbindung steht zur Datenverarbeitung im Chip (CH).

Nach erfolgter Datenverarbeitung, wozu die Steuervorrichtung (ST) mit einer externen Bedienstation verbunden ist, wird der Antriebsmotor (AM) reversiert betrieben und die Karte bedarfsweise von einer Station zur anderen verbracht.

Zuerst wird das zu bedruckende Thermochromic-Schriftfeld (2) in der thermischen Löschstation (TL) mit der Heizplatte (HP) durch die Andruckvorrichtung (A2) für eine vorgegebene Löschzeit kontaktiert. Die Heizplatte (HP) ist dabei auf eine Temperatur, die mindestens der minimalen Löschtemperatur entspricht und unter der Schreibtemperatur liegt, thermostatisch aufgeheizt.

Nach dem Löschen des Schriftfeldes passiert die Karte (1) den Magnetkopf (MLS), wo ggf. neue Daten auf den Magnetstreifen der Karte zurückgeschrieben werden.

Danach wird das Schriftfeld (2) in die erste thermische Schreibstation (TS1) so verbracht, daß eine Druckzeile (DZ) und ein Klischeedrucker (KD) dort plaziert ist, wo eine Kontaktierung durch eine steuerbare Andruckvorrichtung (A3) erfolgt. Nun wird die Druckzeile (DZ) abhängig von dem zu erzeugenden Druckbild elektrisch angesteuert aufgeheizt und das Klischee aufgeheizt bis die Thermochromic-Schicht (2) an den entsprechenden Stellen einen Farbumschlag erfährt.

Sollen mehrere Zeilen auf der Karte (1) gedruckt werden und ist der Einfachheit halber nur eine Druckerzeile (DZ) vorhanden, wird die Karte als nächstes in eine weitere Zeilenposition verbracht und dann bei erneuter Kontaktierung und elektrischer Beheizung ein Abdruck vorgenommen. Der Klischeedrucker (KD) bleibt dann unbeheizt. Dieser Vorgang kann noch weiter wiederholt werden.

Für Fälle, in denen der einfache Zeichen- und Klischeeabdruck nicht ausreichen, ist eine weitere thermische Schreibstation (TS2) vorgesehen, in der eine Druckpunktzeile (PZ) mittels der Kontaktiervorrichtung (A4) mit der Karte (1) Schritt für Schritt kontaktiert wird, wobei die Druckpunkte gesteuert elektrisch beheizt werden und der Motor (AM) schrittweise den Vorschub steuert.

Die Antriebe (31- 34) sind über Zahnräder (ZR1, ZR2) synchron angetrieben. Sie bestehen aus Rollen- oder Radpaaren, die beidseitig der Karte unter leichter Vorspannung angeordnet sind. Die Karte (1) ist bekannterweise in seitlichen Nuten geführt und zu ihrer Normbezugskante gerichtet angetrieben.

Die Druckzeile (DZ) oder mehrere davon und ein oder mehrere Klischeedrucker (KD) sind vorzugsweise auf einem Träger (TR) aus gut wärmeleitendem Keramikwerkstoff angeordnet.

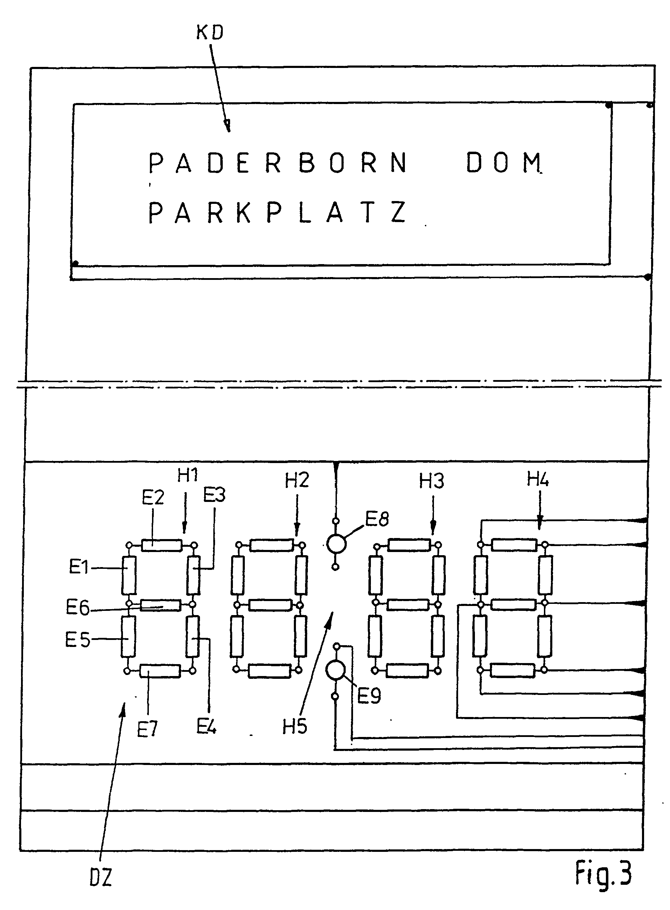

Fig. 3 zeigt eine sehr einfache Ausführung, die den meisten Anwendungen genügt. Auf dem Träger (TR) sind zwei Gruppen (H1, H2; H3, H4) zu zwei Sieben-Segmentfeldern und eine Trennelementgruppe (H5) als Druckzeile (D7). Die Sieben-Segmentfelder bestehen in bekannter Weise aus etwa eine 8 in stilisierter Form darstellenden vertikalen und horizontalen Elementen (E1 - E7), die einzeln mit elektrischem Strom zu speisen sind. Als Trennelemente sind zwei heizbare Punkte (E5) vorgesehen. So lassen sich Geldbeträge bei 99,99 und Stunden - Minuten sowie Tage und Monate darstellen. Wird ein weiteres Sieben-Segmentfeld vorgesehen, kann dort ein Buchstabe zur Symbolisierung der Bedeutung dargestellt werden, z. B. d für Tag, E für Euro, h für Stunde etc..

Der Einfachheit halber sind in Fig. 3 nur bei einem Sieben-Segmentfeld (H4) und der Trennelementgruppe (H5) die Anschlüsse zur Steuerung der Anzeige dargestellt. Selbstverständlich sind auch die anderen Sieben-Segmentfelder (H1 - H3) entsprechend kontaktiert.

Fig. 1 zeigt eine Datenträgerkarte (1) mit einer Maximalausstattung mit rückseitigem Magnetstreifen (MS), vorderseitigen Kontakten (K) des Chips (CH), einer eingelegten Antennenwicklung (A) und, was neu ist, einer Thermochromic-Schicht (2) als Beschriftungsfeld. Auf diesem sind beispielsweise ein Klischeedruck (KLD) und ein Zusatzklischeedruck (ZKD) sowie zwei Ziffern-Druckzeilen (ZD1, ZD2) abgedruckt. Das Klischee zeigt beispielsweise die Ausgabestelle, das Zusatzklischee die Funktion, Parken, und die Druckzeilen das Parkzeitende sowie den Tag an.

## Patentansprüche

1. Vorrichtung zum Bearbeiten einer Datenträgerkarte (1) mit einer thermisch beschreibbaren Schicht (2), wobei die Datenträgerkarte (1) in die Vorrichtung durch einen umkehrbaren Antrieb (31 - 34) eingezogen, dort einer Chiplese-Schreibstation (CLS) und/oder einer Magnetstreifenlese-Schreibstation (MLS) sowie einer thermischen Beschriftungsstation (TS1) nacheinander zugeführt und aus der Vorrichtung ausgeworfen wird, wobei der thermischen Beschriftungsstation (TS1) eine thermische Löschstation (TL) vorgeordnet ist, die mit einer thermostatisch auf eine Löschtemperatur einer Thermochromic-Schicht geheizten Heizplatte (HP) bestückt ist, die bei stehendem Antrieb (31 - 34) mit der thermisch wiederbeschreibbaren Schicht (2) während einer Löschzeit kontaktiert wird **dadurch gekennzeichnet daß**, die thermische Beschriftungsstation (TS1) mit mindestens einer stempelartigen Druckzeile (DZ) mit elektrisch heizbaren Mehrsegmentgruppen (H1 - H5), deren Heizelemente (E1 - E9) zeichenartig gruppiert sind, bestückt ist, die mindestens in einer Stellung mit der Schicht (2) für eine Schreibzeit, während jeweils vorgegebene der Heizelemente (E1 - E9) elektrisch auf eine Schreibtemperatur beheizt sind, kontaktiert wird.

2. Vorrichtung nach Anspruch 1, **dadurch gekennzeichnet, daß** die Mehrsegmentgruppen (H1 - H5) aus ziffernartigen Sieben-Segmentgruppen (H1 - H4) und ggf. dazwischenliegenden Trennelementen (H5) bestehen.

3. Vorrichtung nach Anspruch 2, **dadurch gekennzeichnet, daß** die Sieben-Segmentgruppen (H1, H2; H3, H4) jeweils paarweise nebeneinander nach Art von Datum- oder Uhrzeitanzeigen, ggf. mit zwischen den Paaren liegenden Trennelementen (H5), angeordnet sind.

4. Vorrichtung nach einem der vorstehenden Ansprüche, **dadurch gekennzeichnet, daß** die thermische Beschriftungsstation (TS1) mindestens einen stempelartigen Klischeedrucker (KD) enthält, der auf die Schreibtemperatur elektrisch beheizbar ist und mit der Schicht (2) in einem unbeschrifteten Bereich für die Schreibzeit zu kontaktieren ist.

5. Vorrichtung nach einem der vorstehenden Ansprüche, **dadurch gekennzeichnet, daß** mindestens eine Druckzeile (DZ) und ein oder mehrere der Klischeedrucke (KD) auf einem gemeinsamen Träger (TR) mit einer Kontaktierungseinheit (K) zu einer elektrischen Ansteuervorrichtung (ST) angeordnet sind und jeweils gemeinsam mit der Schicht (2) zu kontaktieren sind.

6. Vorrichtung nach einem der vorstehenden Ansprüche, **dadurch gekennzeichnet, daß** die Datenträgerkarte (1) von dem Antrieb (31 - 34) in mindestens eine weitere Bearbeitungsstation (TS2), vorzugsweise eine thermisch steuerbare Beschriftungspunktzeile (PZ), die steuerbar mit der Schicht (2) kontaktierbar ist, verbringbar und dort zur Beschriftung schrittweise förderbar ist.

7. Vorrichtung nach einem der vorstehenden Ansprüche, **dadurch gekennzeichnet, daß** der Antrieb (31 - 34) aus beidseitig einer Kartenbahn angeordneten Rad- oder Rollenpaaren besteht, die jeweils zwischen den Bearbeitungsstationen (CLS, TL, TS1, TS2) in einem Abstand, der kürzer als eine Kartenlänge ist, angeordnet sind und deren eine Rolle jeweils mittels Zwischenrädern (ZR1, ZR2) oder einem Riemenantrieb mit einem zentralen schrittgesteuerten Antriesmotor (AM) verbunden ist.

8. Vorrichtung nach einem der vorstehenden Ansprüche, **dadurch gekennzeichnet, daß** die Chiplese-Schreibstation (CLS) mit einer Kontaktgruppe (KG) und/oder einer Koppelantenne (KA) bestückt ist, die mit der Steuervorrichtung (ST) verbunden sind.

9. Vorrichtung nach einem der vorstehenden Ansprüche, **dadurch gekennzeichnet, daß** der Antriebsmotor (AM) die Datenträgerkarte (1) durch mindestens eine Lichtschranke (LS1, LS2) über die Steuervorrichtung (ST) und ein Schrittsteuerprogramm in die einzelnen Bearbeitungspositionen verbringt und die Steuervorrichtung (ST) in der jeweiligen Bearbeitungsposition die Kontaktgruppe (KG), die Heizplatte (HP), die Druckzeile (DZ), den Klischeedrucker (KD) und ggf. die Beschriftungspunktzeile (PZ) durch Andruckmittel (A1 - A4) mit der Datenträgerkarte (1) kontaktiert und elektrisch betreibt.

## Claims

1. Device for handling a data storage card (1) with a thermally writable layer (2), wherein the data storage card (1) is drawn into the device by a reversible drive (31 - 34), where it is successively supplied to a chip read/write station (CLS) and/or a magnetic strip read/write station (MLS) as well as a thermal printing station (TS1) and then ejected from the device, wherein a thermal erasure station (TL) is arranged upstream of the thermal printing station (TS1), the thermal erasure station being equipped with a heated plate (HP) thermostatically heated to the erasure temperature of a thermal chrome layer, which, when the drive (31-34) is idle, is brought into contact with the thermally rewritable layer (2) during an erasure time, **characterized in that** the thermal printing station (TS1) is equipped with at least one stamp-like printing line (DZ) with electrically heatable groups of multi-segments (H1 - H5), whose heating elements (E1 - E9) are grouped character-like,, said printing line, in at least one position, being brought into contacted with the layer (2) for a printing interval, while respectively predetermined heating elements (E1 - E9) are electrically heated to a writing temperature.

2. Device according to claim 1, **characterized in that** the groups of multi-segments (H1 - H5) consist of number-like groups of seven segments (H1 - H4) and, if necessary, intermediate separating elements (H5).

3. Device according to claim 2, **characterized in that** the groups of seven segments (H1, H2, H3, H4) are arranged in pairs according to the type of date or time display, if necessary with separating elements (H5) positioned between the pairs.

4. Device according to one of the preceding claims, **characterized in that** the thermal printing station (TS1) contains at least one stamp-like plate printer (KD), which can be electrically heated to the write temperature and is to be brought into contact with the layer (2) in a blank space during the printing interval.

5. Device according to one of the preceding claims, **characterized in that** at least one print line (DZ) and one or several of the plate printers (KD) are arranged on a common carrier (TR) with a contacting unit (K) towards an electrical control device (ST) and are, in each case, to be brought into contact with the layer (2) all at once.

6. Device according to one of the preceding claims, **characterized in that** the data storage card (1) can be fed by the drive (31 - 34) to at least one further working station (TS2), preferably a thermally controlled dotted writing line (PZ), which can be put in contact with the layer (2) in a controlled way, where the data storage card (1) is movable and can be fed stepwise for printing.

7. Device according to one of the preceding claims, **characterized in that** the drive (31 - 34) consists of pairs of wheels or rollers, arranged on both sides of the card's path, between all working stations (CLS, TL, TS 1, TS2), their distance in each case being shorter than a card length, and one roller of each pair is connected by means of idler gears (ZR1, ZR2) or a belt transmission with a central paced driving motor (AM).

8. Device according to one of the preceding claims, **characterized in that** the chip read/write station (CLS) is equipped with a contact group (KG) and/or a couple antenna (KA), which are connected with the control device (ST).

9. Device according to one of the preceding claims, **characterized in that** the driving motor (AM) feeds the data storage card (1) through at least one light barrier (LS1, LS2) into the respective working positions by means of the control device (ST) and a pacing program; and, in the respective working position, the control device (ST) brings into contact with the data storage card (1) the contact group (KG), the heated plate (HP), the print line (DZ), the plate printers (KD) and if necessary the dotted writing line (PZ), by pressure means (A1 - A4), and electrically operates these devices.

## Revendications

1. Dispositif pour traiter une carte de stockage de données (1) avec une couche thermiquement inscriptible (2), la carte de stockage de données (1) pouvant être passée dans le dispositif par un entraînement réversible (31 - 34), où elle est conduite successivement à une station de lecture/écriture de puce (CLS) et/ou une station de lecture/écriture de piste magnétique (MLS) ainsi qu'une station d'impression thermique (TS1), et éjectée du dispositif; une station d'effacement thermique équipée d'une plaque de chauffage (HP) étant montée avant la station d'impression thermique (TS1) ladite plaque étant chauffée thermostatiquement à la température d'effacement d'une couche thermochromique, et étant mise en contact avec la couche thermiquement réinscriptible (2) pendant un cycle d'effacement, pendant l'arrêt du entraînement (31-34), **caractérisé en ce que** la station d'impression thermique (TS1) est équipée avec au moins une ligne d'impression en forme de timbre (DZ) avec des groupes multisegments électriquement chauffables (H1 - H5) dont les éléments de chauffage (E1 - E9) sont groupés en forme de lettre, ladite plaque de chauffage dans au moins une position étant mise en contact avec la couche (2) pendant un cycle d'écriture, tandis que respectivement assortis des éléments de chauffage (E1 - E9) sont électriquement chauffés sur une température d'écriture.

2. Dispositif selon la revendication 1, **caractérisé en ce que** les groupes des multisegments (H1 - H5) se composent des groupes de sept segments en forme de chiffres (H1 - H4) et, si nécessaire, des éléments de séparation intermédiaires (H5).

3. Dispositif selon la revendication 2, **caractérisé en ce que** les groupes de sept segments (H1, H2, H3, H4) sont respectivement arrangés par paires côte à côte, sous la forme d'indication d'une date ou d'une heure, si nécessaire avec les éléments de séparation (H5) entre les paires.

4. Dispositif selon l'une des revendications précédentes, **caractérisé en ce que** la station d'impression thermique (TS1) contient au moins un imprimeur de cliché en forme de timbre (KD) qui est électriquement chauffable à la température d'écriture et doit être mis en contact avec la couche (2) pour la durée du cycle d'écriture dans un secteur non imprimé.

5. Dispositif selon l'une des revendications précédentes, **caractérisé en ce qu'**au moins une ligne d'impression (DZ) et un ou plusieurs des imprimeurs de cliché (KD) sont disposés sur un support commun (TR) avec une unité de contact (K) le liant à un dispositif de commande électrique (ST) et doivent être mis en contact avec la couche (2) ensemble à chaque fois.

6. Dispositif selon l'une des revendications précédentes, **caractérisé en ce que** la carte de stockage de données (1) peut être convoyé par l'entraînement (31 - 34) à au moins encore une autre station de traitement (TS2), de préférence une ligne d'écriture pointillée (PZ) thermiquement commandée qui peut être mise en contact avec la couche (2) de manière contrôlable, où la carte de stockage de données (1) est manoeuvrable par étapes pour l'inscription.

7. Dispositif selon l'une des revendications précédentes, **caractérisé en ce que** l'entraînement (31 - 34) se compose des couples des roues et des rouleaux qui sont disposés des deux côtés d'une voie de carte, positionnés entre toutes les stations de traitement (CLS, TL, TS1, TS2) dans une distance qui est plus courte que la carte est longue, dont un rouleau de chaque couple est attaché au moyen des roues intermédiaires (ZR1, ZR2) ou d'une commande à courroie à un moteur de commande central à incrément (AM).

8. Dispositif selon l'une des revendications précédentes, **caractérisé en ce que** la station de lecture/écriture de puce (CLS) est équipée avec un groupe de contacts (KG) et/ou une antenne d'accouplement (KA) qui sont connectés au dispositif de commande (ST).

9. Dispositif selon l'une des revendications précédentes, **caractérisé en ce que** le moteur de commande (AM) fait passer la carte de stockage de données (1) à travers au moins un barrage photoélectrique (LS1, LS2), au moyen du dispositif de commande (ST) et un programme de gestion à incrément, dans les différentes positions de traitement, et le dispositif de commande (ST) met en contact avec la carte de stockage de données (1), dans la position de traitement respective, le groupe de contacts (KG), le plaque de chauffage (HP), la ligne d'impression, les imprimeurs de cliché (KD), et si nécessaire la ligne d'écriture pointillée (PZ) par des moyens de pression (A1 - A4), et les actionne électriquement.
